# EUROPÄISCHE PATENTSCHRIFT

(11) **EP 1 373 767 B1**
(45) Veröffentlichungstag und Bekanntmachung des Hinweises auf die Patenterteilung: **25.05.2005**
(21) Anmeldenummer: 02753568.1
(22) Anmeldetag: 18.03.2002
(51) Int. Cl.: F16K 1/30

(54) **VENTIL**
VALVE
CLAPET

(30) Priorität: 17.03.2001 DE 10112962
(43) Veröffentlichungstag der Anmeldung: 02.01.2004
(73) Patentinhaber: Wiederkehr, Hans, 8315 Lindau (CH); Wiederkehr, Kurt, 8315 Lindau (CH)
(72) Erfinder: Wiederkehr, Hans, 8315 Lindau (CH); Wiederkehr, Kurt, 8315 Lindau (CH)
(74) Vertreter: Weiss, Peter, Dr. rer. nat.
(86) Internationale Anmeldenummer: PCT/EP2002/002969
(87) Internationale Veröffentlichungsnummer: WO 2002/075186

(56) Entgegenhaltungen:
- EP-A- 0 768 484
- WO-A-01/02761
- BE-A- 553 847
- DE-B- 1 084 215
- GB-A- 784 820
- US-A- 4 815 692
- US-A- 5 520 214
- US-A- 5 678 602

## Beschreibung

Die vorliegende Erfindung betrifft ein Ventil zum Aufsetzen auf einen Behälter, insbesondere auf eine Flasche, in welcher ein Druck aufgebaut ist, mit einem Ventilgehäuse, in welchem zumindest ein vom Flaschendruck unabhängiges Ventil vorgesehen ist, wobei sich das vom Flaschendruck unabhängige Ventil zwischen einem in einem Zylinderraum des Ventilgehäuses gleitenden Kolben und dem Flascheninhalt in Verbindung mit dem Kolben befindet und andererseits auf den Kolben ein in seiner Kraft veränderbarer Kraftspeicher drückt, wobei der Zylinderraum durch ein Federgehäuse verschlossen ist und das Federgehäuse eine axiale Stufenbohrung aufweist, in welcher insbesondere der in seiner Kraft veränderbare Kraftspeicher aufgenommen ist.

In vielen Fällen des privaten und industriellen Bereichs werden Druckflaschen aus Stahl oder Aluminium benutzt, die mit Gasen für einen bestimmten Bedarf gefüllt sind. Diese Gase stehen in der Flasche beispielsweise unter einem Gasdruck von bis zu 300 bar.

Als Beispiel wird auf die Anwendung dieser Flaschen in der Getränkeindustrie Bezug genommen. Für viele Getränke wird eine CO₂-Flasche zur Zugabe von CO₂ zum Getränk verwendet.

Eine weitere wesentliche Anwendung ist bei der Getränkeverpackung gegeben als Schutz des abgefüllten Getränks bis zum Verbrauch. Durch Zugabe eines Druckgases wird das Wachstum von Mikroorganismen verhindert.

Ähnliches gilt auch für medizinische Gase, beispielsweise für die zusätzliche Sauerstoffversorgung des Menschen. Auch hier wird der Sauerstoff in Gasflaschen unter sehr hohem Druck angeliefert. Im Inhalationsapparat darf das Gas aber nur einen wesentlich geringeren Druck aufweisen.

Da das Gas in den Flaschen, wie oben erwähnt, unter sehr hohem Druck steht, bedarf es für die Entnahme des Gases bis heute kostspieliger Reduzieranlagen mit Durchflussmessern und Manometer.

Aus der US 5 520 214 A ist bspw. ein Ventil zum Zuführen von Sauerstoff zu einem Patienten bekannt, bei dem sich in einem Ventilkörper ein Füllventil und ein reguliertes Entnahmeventil befindet. Dabei ist in einem Zylinderraum ein Kolben schwimmend gelagert, der sich gegen eine im Druck einstellbare Schraubenfeder abstützt. Andererseits ist der Kolben fest mit der Kugel eines Kugelventils verbunden. Vor diesem Kugelventil steht der aus der Flasche auszubringende Sauerstoff an.

Aus der US 4 815 692 ist ein Ventil bekannt, bei dem ein mit einem Ventilkegel fest verbundener Kolben in einem Zylinderraum gegen die Kraft von Tellerfedern bewegbar angeordnet ist. Dabei kann der Raum andererseits der Tellerfeder unter Druck gesetzt werden, so dass der Ventilkegel von seinem Sitz abhebt und einen Auslass für ein auszubringendes Medium freigibt.

Ein Ventil der o. g. Art ist aus der DE 10 84 215 B bekannt. Dabei drückt ein sich gegen eine veränderbare Kraft einer Schraubenfeder abstützender Kolben über einen Spindelstift gegen einen Stift, über den wiederum ein Ventilkegel von seinem Ventilsitz abgehoben werden kann. Ist der Druck des in einen Zylinderraum einströmenden Mediums zu hoch, wird der Kolben gegen die einstellbare Feder zurückgedrückt und gleichzeitig die Öffnungsweite des Ventilsitzes vermindert.

Der vorliegenden Erfindung liegt die Aufgabe zugrunde, ein druckminderndes Ventil zu entwickeln, welches ausserordentlich einfach aufgebaut und sehr sicher ist und auch ohne Fachwissen vom Personal bedient werden kann.

Zur Lösung dieser Aufgabe führt, dass der Kraftspeicher als Schraubenfeder ein Zwischenstück umfängt und sich einerseits an einem Kopf des Zwischenstücks und andererseits an dem Kolben abstützt, und in den Kopf des Zwischenstücks ein Betätigungsstift eingesetzt ist, der in dem Zwischenstück einen Ventilraum schliesst, in dem sich ein Rückschlagventil befindet und sich in dem Ventilraum eine Druckfeder gegen einen Rückschlagsventilkegel abstützt, der eine Bohrung in dem Zwischenstück verschliesst, wobei das Zwischenstück in einem Ringraum abgedichtet gleitet, der von einer vom Kolben aufragenden Ringwand (40) gebildet wird und die Bohrung vom Rückschlagventil in den Ringraum einmündet und auch eine Schrägbohrung, welche den Ringraum mit einem Kolbenraum verbindet, in den auch das Ventil einmündet.

Wird beispielsweise der Ventilsitz undicht, so strömt Druckgas durch den Ventilsitz aus und baut in dem Kolbenraum unter dem Kolben einen erhöhten Druck auf. Dieser Druck wirkt dem Kraftspeicher entgegen, der auf den Kolben drückt. Hierdurch verschiebt sich der Kolben, wobei jedoch der Ventilkegel ortsfest bleibt. Das Verschieben bewirkt, dass sich der Stössel von dem Druckstück abhebt und die Schrägbohrung frei gibt. Das Leckgas kann dann durch die Entlastungsbohrung entweichen.

Der Kolben wird in einem Zylinderraum in dem Ventilgehäuse geführt. Er ist dort quasi schwimmend gelagert, und zwar zwischen dem Druckspeicher, der ihn selbst beaufschlagt, und dem Druckspeicher, welcher auf den Ventilkegel drückt.

Dadurch, dass der Ventilsitz vom Flaschendruck unabhängig ist, spielt es keine Rolle, welcher Druck in der Flasche selbst herrscht. Das Ventil wird erst dann geöffnet, wenn der Kolben durch seine Verbindung mit einem Ventilkegel des Ventils diesen Ventilkegel von dem Sitz abhebt und so den Durchfluss von Druckgas gestattet. Das Abheben des Ventilkegels geschieht jedoch durch den Kraftspeicher, der auf den Kolben drückt, so dass für das Abheben des Ventilkegels allein diese Kraft massgebend ist. Auf diese weise kann genau die Menge an Druckgas eingestellt werden, die gewünscht wird.

Der Ventilsitz wird durch den eben erwähnten Ventilkegel gebildet, der in einer Bohrungsöffnung des Ventilgehäuses sitzt. Bevorzugt ist der Ventilkegel abgeschrägt, ebenfalls auch die Kante der Bohrungsöffnung, so dass es hier zu einer ,flächigen Anlage von Ventilkegel an Bohrungsöffnung kommt.

Der Ventilkegel befindet sich bevorzugt in einem Führungsgehäuse, welches in das Ventilgehäuse eingesetzt ist. In diesem Führungsgehäuse stützt sich der Ventilkegel gegen einen Kraftspeicher ab. Als Kraftspeicher wird bevorzugt eine Schraubenfeder verwendet. Das bedeutet, dass der Ventilkegel einerseits unter dem Druck des eben erwähnten Kraftspeichers in Schliesslage gehalten wird, ihm andererseits aber der Druck des oben erwähnten Kraftspeichers, der über den Kolben auf den Ventilkegel übertragen wird, entgegen steht.

Der Ventilkegel sitzt ferner einem Stössel auf, der von der eben erwähnten Schraubenfeder umfangen ist, und der sich in dem Führungsgehäuse befindet und in diesem Führungsgehäuse gleiten kann. Dabei wird er jenseits des Ventilsitzes von einem O-Ring umfasst, der bevorzugt den gleichen Durchmesser aufweist, wie der Ventilsitz. Dadurch wird die Kraft, die durch den Vordruck auf den Ventilsitz wirkt, kompensiert.

Im Führungsgehäuse selbst sind Öffnungen vorgesehen, durch die das Gas aus dem Inneren der Flasche in das Innere des Führungsgehäuses strömen kann. Damit hier keine Verunreinigungen mitgeführt werden, sind die Öffnungen von einem Filterring umfangen, wobei es sich vorzugsweise um einen Hochdrucksinterfilter handelt.

Der Zylinderraum soll durch ein Federgehäuse verschlossen sein. Dieses Federgehäuse besitzt eine Stufenbohrung, in welcher vor allem der in seiner Kraft veränderbare Kraftspeicher aufgenommen ist. Dabei umfängt dieser Kraftspeicher, der als Schraubenfeder ausgebildet ist, ein Zwischenstück, wobei sich der Kraftspeicher einerseits gegen den Kopf des Zwischenstücks und andererseits gegen den Kolben abstützt.

In den Kopf des Zwischenstücks ist ein Betätigungsstift eingesetzt, mit welchem der Kraftspeicher auf Wunsch vorgespannt werden kann, d.h., der Druck des Kraftspeichers erhöht werden kann. Dabei verschliesst der Betätigungsstift gleichzeitig einen Ventilraum in dem Zwischenstück, in dem sich ein Rückschlagventil befindet. Nach dem Rückschlagventil ist ein Anschluss an ein beliebiges Gerät gegeben, welches das in seinem Druck geminderte Druckgas benötigt.

Dieses Rückschlagventil besteht aus einem Rückschlagventilkegel, der in dem Ventilraum unter dem Druck einer Druckfeder steht und dabei eine Bohrung in dem Zwischenstück verschliesst. Diese Bohrung steht über einen Ringraum im Kolben und eine Schrägbohrung durch den Kolben mit dem Kolbenvorraum in Verbindung.

Bei normaler Entnahme des Druckgases gelangt dieses über die Öffnungen im Führungsgehäuse und den Ventilsitz bei abgehobenem Ventilkegel in den Kolbenvorraum und setzt diesen unter Druck. Ist der Druck zu hoch, wird der Kolben gegen die Kraft seines ihn beaufschlagenden Kraftspeichers verdrängt, wobei der Ventilkegel unter dem Druck seines Kraftspeichers folgt und den Durchlass am Ventilsitz vermindert, bis das Regelsystem ausgewogen ist.

Das Druckgas gelangt dann über die Schrägbohrung, den Ringraum, die Bohrung in dem Zwischenstück und das Rückschlagventil zu dem Verbraucher.

Soll der Druck erhöht werden, wird einfach der Druck des Kraftspeichers, welcher den Kolben beaufschlagt, erhöht.

Im bevorzugten Ausführungsbeispiel ist in dem Ventilgehäuse noch ein Befüllventil für die Druckgasflasche vorgesehen, wobei auch diesem ein Rückschlagventil zugeordnet ist.

Ein derartiges Ventil ist überall dort anwendbar, wo bestimmte, genau eingestellte Gasdrücke benötigt werden. Dies ist in der Getränkeindustrie aber auch bei Tauchern oder bei der medizinischen Anwendung notwendig.

Nur als Beispiel wird auf die Anwendung bei medizinischem Sauerstoff verwiesen. Die Atemluft des Menschen enthält ca 19 % Luftsauerstoff und erfüllt damit die Anforderungen des menschlichen Körpers an den Sauerstoffbedarf. Bei beispielsweise Erkrankungen der Atemwege kann es erforderlich sein, die Atemluft auf einen höheren Sauerstoffgehalt anzureichern. Die vorliegende neue Ventiltechnologie erfüllt alle Anforderungen der Patienten, ohne Leistungseinschränkung bis zu höheren Strömungsraten von 0 bis 20 l/min. Sauerstoff zu erhalten. Das Flaschenventil liefert Sauerstoff unter einem konstanten Druck und Fluss, es besitzt ein Sicherheitsventil und ein Wiederbefüllungsventil und ebenfalls einen eingebauten Partikelfilter. Das Sicherheitsventil gewährleistet, einen vorgegebenen maximalen Druck von 2, 4, 6, 8 bis 20 bar zu liefern, je nach Anwendungsart, auch dann, wenn der Flaschendruck bei 300 bar liegt, ohne dass dabei ein Regulierelement betätigt werden muss.

Derartig ausgerüstete Gasflaschen können in Privathaushaltungen, die bisher einen CO₂-Sprudler besassen, eine Umstellung auf Sauerstoff ermöglichen, ohne dass die entsprechenden Geräte ausgetauscht werden müssen.

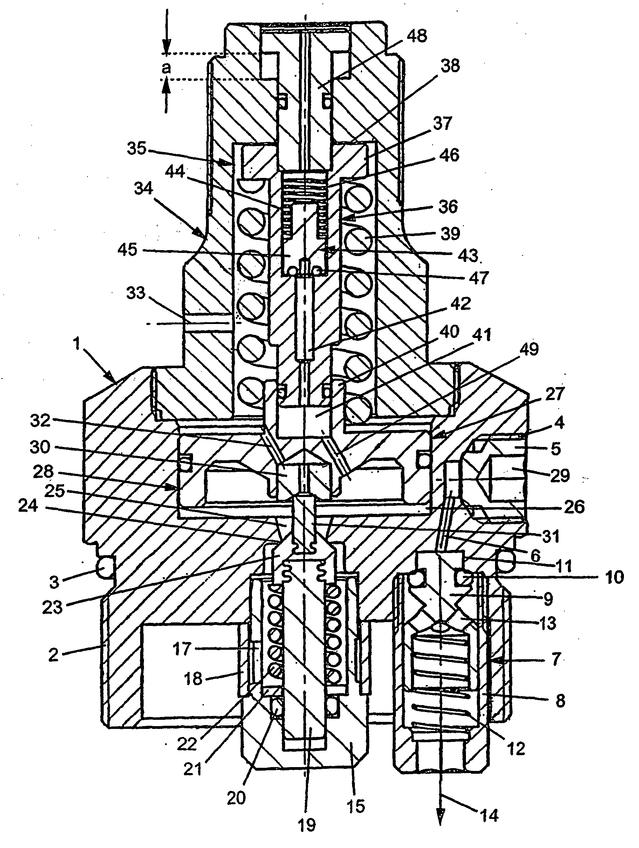

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in ihrer einzigen Figur einen Längsschnitt durch ein erfindungsgemässes Ventil zum Aufsetzen auf einen Behälter.

Das erfindungsgemässe Ventil R weist ein Ventilgehäuse 1 auf, welches beispielsweise über ein Aussengewinde 2 in einen Flaschenhals eingeschraubt werden kann. Zur Abdichtung gegenüber dem nicht gezeigten Flaschenhals ist ein O-Ring 3 vorgesehen.

Im dem Ventilgehäuse 1 befindet sich eine Einrichtung zum Befüllen des Behälters. Diese Einrichtung weist einen Füllanschluss 4 auf, der mit einem Stopfen 5 verschlossen ist. Von dem Füllanschluss 4 führt ein Kanal 6 zu einem Rückschlagventil 7. Dieses Rückschlagventil 7 weist ein Gehäuse 8 auf, welches in das Ventilgehäuse 1 eingeschraubt ist. In dem Gehäuse 8 sitzt ein Ventilkörper 9, in dem ein O-Ring 10 vorgesehen ist. Der O-Ring 10 bildet zusammen mit einer Kante einer Ausnehmung 11 einen Ventilsitz, wobei die Ausnehmung 11 mit dem Kanal 6 in Verbindung steht.

Anderenends des O-Ringes 10 stützt sich der Ventilkörper 9 gegen eine Schraubenfeder 12 ab, welche den O-Ring 10 an die Kante der Ausnehmung 11 andrückt und so den Ventilsitz bewirkt.

In dem Ventilkörper 9 sind ferner Löcher 13 vorhanden, durch welche das Befüllmedium in die nicht näher gezeigte Flasche strömen kann, wie durch den Pfeil 14 angedeutet.

Neben dem Rückschlagventil 7 befindet sich ein Führungsgehäuse 15, welches ebenfalls in das Ventilgehäuse 1 eingesetzt ist. Dieses Führungsgehäuse 15 weist eine Stufenausnehmung 16 auf, welche Öffnungen 17 zum Inneren der Flasche hin besitzt. Diese Öffnungen 17 sind von einem Filterring 18 überdeckt.

In der Stufenausnehmung 16 befindet sich ein Stössel 19, der von einem O-Ring 20 umfangen ist. Auf dem O-Ring 20 liegt ein Ring 21 auf, gegen den sich eine Schraubenfeder 22 abstützt.

Andererseits untergreift die Schraubenfeder 22 einen Ventilkegel 23, der in einer Bohrungsöffnung 24 einer konischen Bohrung 25 sitzt. Diese konische Bohrung 25 steht mit einem Kolbenraum 26 in einem Zylinderraum 27 in Verbindung. In dem Zylinderraum 27 gleitet ein Kolben 28, umfangsseitig abgestützt durch einen O-Ring 29.

Vom Ventilkegel 23 her ragt in den Kolben 28 ein Druckstück 30 ein, welches mit dem Ventilkegel 23 über einen Stössel 31 in Verbindung steht. Dieses Druckstück 30 verschliesst eine Schrägbohrung 32, welche mit einer Entlastungsbohrung 33 kommunizieren kann. Die Entlastungsbohrung 33 befindet sich in einem Federgehäuse 34, welches in das Ventilgehäuse 1 eingeschraubt ist und den Zylinderraum 27 abschliesst.

In dem Federgehäuse 34 ist eine Stufenbohrung 35 vorgesehen, welche das Federgehäuse 34 axial durchsetzt. Durch diese Stufenbohrung 35 hindurch kann die Schrägbohrung 32 mit der Entlastungsbohrung 33 kommunizieren.

In der Stufenbohrung 35 befindet sich ein Zwischenstück 36, welches mit einem Kopf 37 einer Innenschulter 38 der Stufenbohrung 35 anliegt. Andererseits der Innenschulter 38 ist der Kopf 37 von einer Schraubenfeder 39 unterlegt, welche das Zwischenstück 36 umfängt und sich andererseits gegen den Kolben 28 abstützt. Dabei umfängt die Schraubenfeder 39 auch eine Ringwand 40, die vom Kolben 28 aufragt und einen Ringraum 41 ausbildet.

In dem Ringraum 41 gleitet das Zwischenstück 36, wobei von dem Ringraum 41 aus eine Axialbohrung 42 zu einem Rückschlagventil 43 führt. Hierzu befindet sich in einem Ventilraum 44 ein Rückschlagventilkegel 45, der sich gegen eine Druckfeder 46 abstützt. Gegenüber der Axialbohrung 42 ist eine Stirnfläche des Rückschlagventilkegels 45 mit einem O-Ring 47 besetzt.

Nach oben hin wird der Ventilraum 44 durch einen Betätigungsstift 48 verschlossen, der ebenfalls in der Stufenbohrung 35 gleitet.

Der Ringraum 41 steht im übrigen durch eine weitere Schrägbohrung 49 mit dem Kolbenraum 26 in Verbindung.

Die Funktionsweise des vorliegenden erfindungsgemässen Ventils ist folgende:

Im Normalzustand wird eine Flasche über den Füllanschluss 4 und das Rückschlagventil 7 mit einem Medium befüllt, welches in der Flasche unter einem vorbestimmten Druck steht. Ein über die Schraubenfeder 39 und den maximalen Weg a des Druckstiftes 48 vorgegebener Hinterdruck soll über den gesamten Bereich des Flaschendrucks konstant abgegeben werden.

Der Ventilkegel 23 steht unter dem Druck der Schraubenfeder 22, so dass sich hier der Flaschendruck nicht auswirkt und das Regelsystem hinterdruckstabil ist. Dabei besitzt der O-Ring 20 die gleiche Grösse wie der Ventilsitz 24/23, so dass die Kraft, die durch den Vordruck auf den Ventilsitz wirkt, kompensiert wird.

Soll der Druck gemindert werden, so wird der Betätigungsstift 48 betätigt und der Weg a verringert. Der Betätigungsstift 48 drückt auf das Zwischenstück 36 und spannt die Schraubenfeder 39, die auf den Kolben 28 wirkt. Der Kolben 28 drückt über das Druckstück 30 und den Stössel 31 auf den Ventilkegel 23, so dass Gas durch die Öffnungen 17 über den Ventilsitz 23/24 und die Bohrung 25 in den Kolbenraum 26 einströmen kann. Dies geschieht so lange, bis unter dem Kolben 28 genügend Druck aufgebaut ist, welcher der Kraft der vorgespannten Feder 39 entgegenwirkt und dadurch die Öffnung am Ventilsitz 23/24 verkleinert wird.

Das Gas strömt weiter durch die Schrägbohrung 49 in den Ringraum 41 und von dort durch das Rückschlagventil 43 in ein nicht näher gezeigtes angeschlossenes Gerät. Hierdurch lässt der Druck auf den Kolben 28 wieder nach, so dass die Kraft der Schraubenfeder 39 wieder überwiegt und es wieder zu einem Öffnen des Ventilsitzes 23/24 kommt. Dadurch ist das Regelsystem ausgewogen.

Wichtig ist im vorliegenden Fall auch der Sicherheitsventilsitz, welcher durch das Druckstück 30 und die Schrägbohrung 32 gebildet wird. Ist beispielsweise der Ventilkegel 23 und bzw. der Ventilsitz 23/24 undicht, strömt das Gas unter den Kolben 28, der sich gegen die Schraubenfeder 39 bewegt. Dadurch wird der Verschluss der Schrägbohrung 32 durch das Druckstück 30 aufgehoben, so dass Leckgas durch die Schrägbohrung 32 in die Stufenbohrung 35 des Federgehäuses 34 und über die Entlastungsbohrung 33 nach aussen strömen kann.

### Positionszahlenliste

| | | | | | |
|---|---|---|---|---|---|
| 1 | Ventilgehäuse | 34 | Federgehäuse | 67 | |
| 2 | Aussengewinde | 35 | Stufenbohrung | 68 | |
| 3 | 0-122 mg | 36 | Zwischenstück | 69 | |
| 4 | Füllanschluss | 37 | Kopf | 70 | |
| 5 | Stopfen | 38 | Innenschulter | 71 | |
| 6 | Kanal | 39 | Schraubenfeder | 72 | |
| 7 | Rückschlagventil | 40 | Ringwand | 73 | |
| 8 | Gehäuse | 41 | Ringraum | 74 | |
| 9 | Ventilkörper | 42 | Axialbohrung | 75 | |
| 10 | O-Ring | 43 | Rückschlagventil | 76 | |
| 11 | Ausnehmung | 44 | Ventilraum | 77 | |
| 12 | Schraubenfeder | 45 | Rückschlagventilkegel | 78 | |
| 13 | Löcher | 46 | Druckfeder | 79 | |
| 14 | Pfeil | 47 | O-Ring | a | Weg |
| 15 | Führungsgehäuse | 48 | Betätigungsstift | | |
| 16 | Stufenausnehmung | 49 | Schrägbohrung | | |
| 17 | Öffnung | 50 | | | |
| 18 | Filterring | 51 | | | |
| 19 | Stössel | 52 | | | |
| 20 | O-Ring | 53 | | | |
| 21 | Ring | 54 | | | |
| 22 | Schraubenfeder | 55 | | | |
| 23 | Ventilkegel | 56 | | | |
| 24 | Bohrungsöffnung | 57 | | | |
| 25 | Bohrung | 58 | | | |
| 26 | Kolbenraum | 59 | | | |
| 27 | Zylinderraum | 60 | | R | Ventil |
| 28 | Kolben | 61 | | | |
| 29 | O-Ring | 62 | | | |
| 30 | Druckstück | 63 | | | |
| 31 | Stössel | 64 | | | |
| 32 | Schrägbohrung | 65 | | | |
| 33 | Entlastungsbohrung | 66 | | | |

## Patentansprüche

1. Ventil zum Aufsetzen auf einen Behälter, insbesondere auf eine Flasche, in welcher ein Druck aufgebaut ist, mit einem Ventilgehäuse (1), in welchem zumindest ein von Flaschendruck unabhängiges Ventil (23, 24) vorgesehen ist, wobei sich das vom Flaschendruck unabhängige Ventil (23, 24) zwischen einem in einem Zylinderraum (27) des Ventilgehäuses (1) gleitenden Kolben (28) und dem Flascheninhalt in Verbindung mit dem Kolben (28) befindet und andererseits auf den Kolben (28) ein in seiner Kraft veränderbarer Kraftspeicher (39) drückt, wobei der Zylinderraum (27) durch ein Federgehäuse (34) verschlossen ist und das Federgehäuse (34) eine axiale Stufenbohrung (35) aufweist, in welcher insbesondere der in seiner Kraft veränderbare Kraftspeicher (39) aufgenommen ist,
**dadurch gekennzeichnet,**
**dass** der Kraftspeicher (39) als Schraubenfeder ein Zwischenstück (36) umfängt und sich einerseits an einem Kopf (37) des Zwischenstücks (36) und andererseits an dem Kolben (28) abstützt, und in den Kopf (37) des Zwischenstücks (36) ein Betätigungsstift (48) eingesetzt ist, der in dem Zwischenstück (36) einen Ventilraum (44) schliesst, in dem sich ein Rückschlagventil (45, 46) befindet und sich in dem Ventilraum (44) eine Druckfeder (46) gegen einen Rückschlagsventilkegel (45) abstützt, der eine Bohrung (42) in dem Zwischenstück (36) verschliesst, wobei das Zwischenstück (36) in einem Ringraum (41) abgedichtet gleitet, der von einer vom Kolben (28) aufragenden Ringwand (40) gebildet wird und die Bohrung (42) vom Rückschlagventil in den Ringraum (41) einmündet und auch eine Schrägbohrung (49), welche den Ringraum (41) mit einem Kolbenraum (26) verbindet, in den auch das Ventil (23, 24) einmündet.

2. Ventil nach Anspruch 1, **dadurch gekennzeichnet, dass** ein Ventilkegel (23) des Ventils (23, 24) über einen Stössel (31) eine Schrägbohrung (32) in dem Kolben (28) verschliesst, welche mit einer Entlastungsbohrung (33) im Ventilgehäuse (1) bzw. einem Federgehäuse (34) in Verbindung steht.

3. Ventil nach Anspruch 2, **dadurch gekennzeichnet, dass** sich der Ventilkegel (23) in einem Führungsgehäuse (15), welches in das Ventilgehäuse (1) eingesetzt ist, gegen einen Kraftspeicher (22) abstützt.

4. Ventil nach Anspruch 2 oder 3, **dadurch gekennzeichnet, dass** der Ventilkegel (23) einem Stössel (19) aufgesetzt ist, der gegebenenfalls von einer Schraubenfeder (22) als Kraftspeicher umgeben ist und der in einem O-Ring (20) gleitet, der den gleichen Innendurchmesser aufweist, wie die Bohrungsöffnung (24).

5. Ventil nach Anspruch 3 oder 4, **dadurch gekennzeichnet, dass** das Führungsgehäuse (15) zumindest eine Öffnung (17) zum Inneren der Flasche aufweist.

6. Ventil nach Anspruch 5, **dadurch gekennzeichnet, dass** die Öffnung (17) von einem Filter (18) überdeckt ist.

7. Ventil nach wenigstens einem der Ansprüche 1 bis 6, **dadurch gekennzeichnet, dass** in dem Ventilgehäuse (1) auch ein Befüllventil vorgesehen ist.

8. Ventil nach Anspruch 7, **dadurch gekennzeichnet, dass** das Befüllventil als Rückschlagventil (7) ausgebildet ist.

## Claims

1. Valve for fitting to a container, more especially to a bottle in which a pressure has built-up, said valve having a valve housing (1), in which at least one valve (23, 24), independent of the bottle pressure, is provided, the valve (23, 24), independent of the bottle pressure, being situated between a piston (28), which slides in a cylinder chamber (27) of the valve housing (1), and the bottle contents in conjunction with the piston (28), and at the other end a force accumulator (39), which is variable in respect of its force, pressing upon the piston (28), the cylinder chamber (27) being sealed by a spring housing (34), and the spring housing (34) having an axial stepped bore (35), in which more especially the force accumulator (39), which is variable in respect of its force, is accommodated, **characterised in that** the force accumulator (39), in the form of a helical spring, surrounds an intermediate part (36) and is supported at one end on a head (37) of the intermediate part (36) and at the other end on the piston (28), and an actuating pin (48) is inserted into the head (37) of the intermediate part (36), which pin closes a valve chamber (44) in the intermediate part (36), in which valve chamber a non-return valve (45, 46) is situated, and a compression spring (46) is supported in the valve chamber (44) against a non-return valve cone (45), which seals a bore (42) in the intermediate part (36), the intermediate part (36) sliding in a sealed manner in an annular chamber (41), which is formed by an annular wall (40) protruding from the piston (28), and the bore (42) extending from the non-return valve into the annular chamber (41), and there also being an inclined bore (49), which connects the annular chamber (41) to a piston chamber (26), into which the valve (23, 24) also extends.

2. Valve according to claim 1, **characterised in that** a valve cone (23) of the valve (23, 24) seals an inclined bore (32) in the piston (28) via a stem (31), which bore communicates with a discharge bore (33) in the valve housing (1) or respectively in a spring housing (34).

3. Valve according to claim 2, **characterised in that** the valve cone (23) is supported in a guide housing (15), which is inserted into the valve housing (1), against a force accumulator (22).

4. Valve according to claim 2 or 3, **characterised in that** the valve cone (23) is fitted to a stem (19), which is possibly surrounded by a helical spring (22) serving as the force accumulator, and which slides in an O-ring (20), which has the same internal diameter as the bore opening (24).

5. Valve according to claim 3 or 4, **characterised in that** the guide housing (15) has at least one opening (17) facing the interior of the bottle.

6. Valve according to claim 5, **characterised in that** the opening (17) is covered by a filter (18).

7. Valve according to at least one of claims 1 to 6, **characterised in that** a filling valve is also provided in the valve housing (1).

8. Valve according to claim 7, **characterised in that** the filling valve is in the form of a non-return valve (7).

## Revendications

1. Clapet destiné à être placé sur un récipient, en particulier sur une bouteille dans laquelle est accumulée une pression, avec un corps de soupape (1) dans lequel est prévue au moins une soupape indépendante de la pression de la bouteille (23, 24), la soupape indépendante de la pression de la bouteille (23, 24) étant, entre un piston (28) coulissant dans une chambre de cylindre (27) du corps de soupape (1) et le contenu de la bouteille, en communication avec le piston (28) et, d'autre part, sur le piston (28) poussant un accumulateur de force (39) variable quant à sa force, la chambre de cylindre étant obturée (27) par un boîtier de ressort (34) et le boîtier de ressort (34) présentant un alésage étagé axial (35) dans lequel est reçu l'accumulateur de force (39) variable quant à sa force,
**caractérisé par le fait**
**que** l'accumulateur de force (39) entoure, comme ressort hélicoïdal, une pièce intermédiaire (36) et s'appuie, d'une part, sur une tête (37) de la pièce intermédiaire (36) et, d'autre part, sur le piston (28), et que dans la tête (37) de la pièce intermédiaire (36) est placée une cheville d'actionnement (48) qui ferme, dans la pièce intermédiaire (36), une chambre de soupape (44) dans laquelle se trouve un clapet de retenue (45, 46) et qu'un ressort de poussée (46) s'appuie, dans la chambre de soupape (44), sur un cône de clapet de retenue (45) qui obture un alésage (42) dans la pièce intermédiaire (36), la pièce intermédiaire (36) coulissant de manière étanche dans un espace annulaire (41) qui est formé par une paroi annulaire (40) s'élevant depuis le piston (28) et que l'alésage (42) aboutit du clapet de retenue dans l'espace annulaire (41) et également un alésage oblique (49) qui relie l'espace annulaire (41) à une chambre de piston (26) dans laquelle aboutit également la soupape (23, 24).

2. Clapet selon la revendication 1, **caractérisé par le fait qu'**un cône (23) de la soupape (23, 24) obture, par l'intermédiaire de son poussoir (31), un alésage oblique (32) dans le piston (28) qui communique avec un alésage de détente (33) dans le corps de soupape (1) ou un boîtier de ressort (34).

3. Clapet selon la revendication 2, **caractérisé par le fait que** le cône de soupape (23) s'appuie, dans un boîtier de guidage (15) qui est placé dans le corps de soupape (1), sur un accumulateur de force (22).

4. Clapet selon la revendication 2 ou 3, **caractérisé par le fait que** le cône de soupape (23) est placé sur un poussoir (19) qui est éventuellement entouré d'un ressort hélicoïdal (22) comme accumulateur de force et qui coulisse dans un joint torique (20) qui présente le même diamètre intérieur que l'ouverture d'alésage (24).

5. Clapet selon la revendication 3 ou 4, **caractérisé par le fait que** le boîtier de guidage (15) présente au moins une ouverture (17) vers l'intérieur de la bouteille.

6. Clapet selon la revendication 5, **caractérisé par le fait que** l'ouverture (17) est recouverte par un filtre (18).

7. Clapet selon au moins l'une des revendications 1 à 6, **caractérisé par le fait que** dans le corps de soupape (1) est également prévue une soupape de remplissage.

8. Clapet selon la revendication 7, **caractérisé par le fait que** la soupape de remplissage est réalisée sous forme de clapet de retenue (7).
